# NEUE EUROPÄISCHE PATENTSCHRIFT

(11) **EP 2 576 303 B2**
(45) Veröffentlichungstag und Bekanntmachung des Hinweises auf die Entscheidung über den Einspruch: **21.12.2022**
(45) Hinweis auf die Patenterteilung: 26.02.2020
(21) Anmeldenummer: 11723387.4
(22) Anmeldetag: 19.05.2011
(51) Int. Cl.: B60W 10/06, B60W 10/184, B60W 20/14, B60W 30/02, B60W 30/18, B60K 6/485, B60R 16/03, B60W 10/08, H02J 7/14

(54) **VERFAHREN ZUM BETREIBEN EINES SYSTEMS, SYSTEM, STEUERUNG UND COMPUTERPROGRAMMPRODUKT**
METHOD FOR OPERATING A SYSTEM, SYSTEM, CONTROLLER, AND COMPUTER PROGRAM PRODUCT
PROCÉDÉ POUR FAIRE FONCTIONNER UN SYSTÈME, SYSTÈME, COMMANDE ET PRODUIT DE PROGRAMME D'ORDINATEUR

(30) Priorität: 26.05.2010 DE 102010029299
(43) Veröffentlichungstag der Anmeldung: 10.04.2013
(73) Patentinhaber: Robert Bosch GmbH, 70442 Stuttgart (DE); SEG Automotive Germany GmbH, 70499 Stuttgart (DE)
(72) Erfinder: WOLF, Gert, 71563 Affalterbach (DE); BECK, Markus, 71711 Steinheim (DE)
(74) Vertreter: DehnsGermany Partnerschaft von Patentanwälten
(86) Internationale Anmeldenummer: PCT/EP2011/058099
(87) Internationale Veröffentlichungsnummer: WO 2011/147729

(56) Entgegenhaltungen:
- EP-A2- 1 306 263
- EP-A2- 1 839 985
- EP-B1- 2 579 303
- WO-A1-2004/106102
- WO-A1-2008/000980
- WO-A1-2008/000980
- WO-A1-2009/077319
- WO-A2-2011/147729
- DE-A1- 10 324 948
- DE-A1- 10 330 703
- JP-A- 2006 033 966
- US-A- 5 511 859
- US-A- 5 967 621
- US-A1- 2003 117 113
- US-A1- 2006 102 394
- US-A1- 2007 139 975
- US-A1- 2007 276 556
- US-A1- 2009 021 198
- US-B1- 6 177 734
- US-B1- 6 177 734
- US-B1- 6 234 932
- US-B1- 6 234 932
- "KRAFTFAHRTECHNISCHES TASCHENBUCH, 24. Auflage", April 2002 (2002-04) ISBN: 3-528-13876-9 pages 926-933,

## Beschreibung

### Stand der Technik

Die Erfindung bezieht sich auf ein Verfahren zum Betreiben eines Systems für ein Kraftfahrzeug, wobei das System eine Steuerung, ein Hochspannungsbordnetz, ein Niederspannungsbordnetz, einen DC/DC-Wandler, der das Hochspannungsbordnetz und das Niederspannungsbordnetz verbindet, und eine elektrische Maschine, insbesondere einen Starter- oder Motorgenerator, umfasst. Die Erfindung bezieht sich auch auf ein solches System.

Die Erfindung bezieht sich ferner auf ein Computerprogrammprodukt.

Es ist bekannt, einen Mehrspannungsgenerator in einem Mehrspannungsbordnetz anzuordnen.

Die DE 103 30 703 A1 beschreibt ein Mehrspannungsbordnetz mit einem Mehrspannungsgeneratormotor mit einem Regler, einem Pulswechselrichter, einen DC/DC-Wandler und einer Steuerung. Der DC/DC-Wandler verbindet einen Niederspannung-und ein Hochspannungsbordnetz.

Die WO 2008/ 000980 A1 beschreibt ein Mikro-Hybrid-System für ein Fahrzeug mit einem Startergenerator, der mechanisch mit einer Brennkraftmaschine vom Fahrzeug verbunden ist sowie einem Wechselstrom-Gleichstrom-Wandler, einem Gleichstrom-Gleichstrom-Wandler und zwei elektrischen Energiespeichern um von der elektrischen Drehstrommaschine erzeugten Stromverbrauchern zur Verfügung zu stellen.

Aus der US 6 234 932 B1 ist eine Steuervorrichtung für ein Hybridfahrzeug bekannt.

Aus der US 6 177 734 B1 ist ein Starter-Generator für eine Brennkraftmaschine bekannt.

Es ist Aufgabe der Erfindung ein Verfahren zum Betreiben eines Systems, ein System, und ein Computerprogrammprodukt der eingangs genannten Art derart weiterzubilden, sodass das System effizienter und mit einer höheren Funktionalität einsetzbar ist.

### Offenbarung der Erfindung

Erfindungsgemäß wird die Aufgabe durch die Gegenständer der unabhängigen Patentansprüche gelöst. Die abhängigen Ansprüche definieren bevorzugte Weiterbildungen der Erfindung.

Es ist ein Gedanke der Erfindung, dass ein Betriebsmodus eines Systems abhängig von Betriebsanforderungen, insbesondere durch einen Betriebszustand des Kraftfahrzeugs, variiert wird. Dazu werden vorzugsweise die Betriebsanforderung, die während einem Betrieb des Kraftfahrzeugs auftreten, von einer Steuerung aufgenommen und das System, insbesondere eine elektrische Maschine, abhängig davon betrieben.

Die Aufgabe wird auch durch ein System gelöst, das für ein zuvor oder nachfolgend beschriebenes Verfahren ausgebildet ist und bei dem insbesondere die elektrische Maschine als mehrphasige Wechselstrommaschine ausgebildet ist. Ferner wird eine Steuerung offenbart, insbesondere für das System, die zum Ausführen der zuvor oder nachfolgend beschriebenen Verfahren ausgebildet ist, und zwar insbesondere mit einer Betriebsstrategie zum Variieren des Betriebsmodus des Systems.

Sofern nicht explizit genannt, bezeichnet der Begriff Steuerung zumindest ein Steuergerät, beispielsweise ein Steuergerät der elektrischen Maschine, ein Motorsteuergerät, ein Bordnetzsteuergerät, ein Steuergerät des DC/DC-Wandlers, ein Steuergerät einer Bremssicherheitsvorrichtung, ein Batteriesteuergerät, und/oder auch ein zentrales Steuergerät für das System oder auch für das Kraftfahrzeug. Dabei kann die Steuerung auch eine Kombination, insbesondere dieser, Steuergeräte, umfassen und es können die zuvor und nachfolgend beschriebenen Verfahrensschritte jeweils in genau einem Steuergerät oder auch in einer Mehrzahl Steuergeräte verteilt ausgeführt werden.

Die elektrische Maschine ist vorzugsweise als ein Starter- oder Motorgenerator ausgebildet, sodass die elektrische Maschine in einem Motorbetrieb und/oder einem Generatorbetrieb, insbesondere als Starter und/oder als Generator, betreibbar ist.

Vorzugsweise kann eine elektrische Abgabeleistung des Generators, also der generatorisch betriebenen elektrischen Maschine, insbesondere mittels der Steuerung, variiert werden, insbesondere um das Drehmoment zu steuern.

Die elektrische Maschine ist vorzugsweise mit einer Brennkraftmaschine des Fahrzeugs gekoppelt und beeinflusst direkt oder indirekt einen Antriebsstrang des Kraftfahrzeugs. Über die Kopplung, beispielsweise mit einem Riementrieb, kann ein hohes Drehmoment, beispielsweise 10 Nm bis 17 Nm auf einer Welle der elektrischen Maschine oder 30 Nm bis 50 Nm auf einer Kurbelwelle der Brennkraftmaschine, insbesondere auch mit sehr hohen Gradienten, beispielsweise 1500 Nm pro Sekunde bis 5000 Nm pro Sekunde auf der Kurbelwelle, auf eine angetriebene Achse des Kraftfahrzeugs übertragen werden.

Erfindungsgemäß wird das System bei einem Schubbetrieb oder einem Bremsbetrieb des Kraftfahrzeugs in einem Rekuperationsmodus betrieben, wobei die elektrische Maschine mit dem von der Steuerung ansteuerbaren Drehmoment, insbesondere einem Bremsmoment, betrieben wird, und zwar in Kommunikation mit der Bremssicherheitsvorrichtung des Kraftfahrzeugs, wie nachfolgend erläutert wird. Durch den Rekuperationsmodus lässt sich Bewegungsenergie des Kraftfahrzeugs rückgewinnen, indem die elektrische Maschine als Generator betrieben wird, beispielsweise um einen Kraftstoffverbrauch zu reduzieren.

Bei dem Rekuperationsmodus im Schubbetrieb, dem sogenannten Schubmodus, nämlich bei einer Betriebsanforderung, bei der die Brennkraftmaschine durch das Kraftfahrzeug geschleppt wird, wird das Drehmoment der elektrischen Maschine vorzugsweise auf einen geeigneten Wert limitiert, der insbesondere geringer als ein maximales Drehmoment ist, beispielsweise um ein starkes Abbremsen des Kraftfahrzeugs zu verhindern. Auch kann das Drehmoment so gesteuert werden, beispielsweise bei einer Bergabfahrt des Kraftfahrzeugs, dass dessen Geschwindigkeit im Wesentlichen konstant gehalten oder nur langsam verändert wird.

Bei dem Rekuperationsmodus im Bremsbetrieb, dem sogenannten Bremsmodus, also bei einer Betriebsanforderung zur, insbesondere raschen, Reduzierung der Geschwindigkeit des Kraftfahrzeugs, insbesondere durch Betätigen eines Bremspedals, wird vorzugsweise eine Limitierung des Drehmoments aufgehoben, sodass, insbesondere auch durch eine maximale elektrische Abgabeleistung, ein maximales Drehmoment möglich ist. Dabei kann das Drehmoment der elektrischen Maschine in Abhängigkeit einer erforderlichen Bremsleistung variiert werden.

Durch die Kopplung zwischen der Brennkraftmaschine und der elektrischen Maschine, insbesondere durch das Drehmoment, kann eine Bremskraftverteilung deutlich gestört werden. Erfindungsgemäß wird deshalb beim Rekuperationsmodus das Drehmoment von der Bremssicherheitsvorrichtung, beispielsweise einem Antiblockiersystem oder einer Steuerung, die ein elektronisches Stabilitätsprogramm umfasst, berücksichtigt, um eine Anpassung der Bremskraftverteilung vorzunehmen. Zusätzlich oder auch alternativ kann erfindungsgemäß ein Verlauf des zukünftigen Drehmoments, vorzugsweise von der Bremssicherheitsvorrichtung, berücksichtigt werden, und zwar insbesondere falls das System aufgrund einer Betriebsanforderung in dem Rekuperationsmodus betrieben werden soll, beispielsweise falls aus einem Steuergerät ein Rekuperationsvorgang angekündigt wird.

Dazu wird erfindungsgemäß von der Steuerung eine Information über das Drehmoment oder über ein zukünftiges Drehmoment der elektrischen Maschine, ermittelt, wie später erläutert wird. Dabei kann die Information Daten, insbesondere Betriebsgrößen der elektrischen Maschine, umfassen, aus denen das Drehmoment ableitbar ist. Es ist bevorzugt, dass die Information direkt dem Drehmoment entspricht, sodass beispielsweise die Anpassung der Bremskraftverteilung vereinfacht realisierbar ist. Erfindungsgemäß wird die Information an das Steuergerät der Bremssicherheitsvorrichtung übertragen, und zwar beispielsweise von dem Steuergerät der elektrischen Maschine, dem Motorsteuergerät oder auch dem zentralen Steuergerät des Systems.

Ferner kann, insbesondere durch die Bremssicherheitsvorrichtung, beispielsweise falls eine kritische fahrdynamische Situation wie einer schnellen Fahrt in eine Kurve erkannt wird, das Drehmoment beschränkt und/oder, um das Drehmoment der elektrischen Maschine im Wesentlichen zu verhindern, der Rekuperationsmodus unterdrückt oder auch abgebrochen werden. So lässt sich ein zusätzliches Drehmoment, insbesondere der generatorisch beschriebenen elektrischen Maschine, auf zumindest eine Antriebsachse des Kraftfahrzeugs und damit ein instabiler Fahrzustand verhindern. Das Steuergerät der Bremssicherheitsvorrichtung kann in Kommunikation mit einem weiteren Steuergerät, beispielsweise dem Steuergerät der elektrischen Maschine oder des Systems, ausgebildet sein, insbesondere um ein Signal zum Unterdrücken des Rekuperationsmodus zu übertragen.

Ist das Drehmoment oder auch ein Gradient des Drehmoments zu hoch, beispielsweise indem ein gewisser Grenzwert überschritten wird, kann ein Tastverhältnis oder auch ein Erregerstrom der elektrischen Maschine beschränkt werden, um, wie zuvor genannt, das Drehmoment beziehungsweise den Gradienten zu beschränken oder zu reduzieren. Dazu kann auch ein Gradient des Tastverhältnisses und/oder auch ein Gradient des Erregerstroms beschränkt werden.

Erfindungsgemäß wird in dem Rekuperationsmodus das Drehmoment, insbesondere das Bremsmoment auf der Antriebsachse, erhöht, indem eine Niederspannung des Niederspannungsbordnetzes erhöht wird, sodass sich auch ein Strom durch den DC/DC-Wandler erhöht. So lässt sich, während des Rekuperationsmodus, der generatorisch betriebenen elektrischen Maschine eine höhere elektrische Leistung entnehmen, und ihr Drehmoment erhöhen. Ein weiterer Vorteil liegt darin, dass bei der erhöhten Niederspannung auch mehr Energie während des Rekuperationsmodus in einer Batterie aufgenommen werden kann, um diese später wieder an das Bordnetz abzugeben.

Vorzugweise wird die Erregerspannung während des Rekuperationsmodus über einen Maximalwert der Erregerspannung für einen Dauerbetrieb, insbesondere einen generatorischen Standardbetriebsmodus, erhöht, und zwar insbesondere um das Drehmoment zu erhöhen und/oder auch eine höhere Abgabeleistung der elektrischen Maschine für eine erhöhte Gewinnung von Rekuperationsenergie zu erreichen. Dies ist, wie später erläutert, zulässig, da es sich bei dem Rekuperationsmodus um einen zeitlich beschränkten Betriebsmodus handelt.

Die elektrische Maschine kann auch außerhalb des Rekuperationsmodus generatorisch betrieben werden, beispielsweise mit dem generatorischen Standardbetriebsmodus während eines normalen Fahrbetriebs des Kraftfahrzeugs, bei dem sowohl das Kraftfahrzeug als auch die elektrische Maschine durch die Brennkraftmaschine angetrieben werden.

Dabei kann das Hochspannungsbordnetz mit elektrischer Energie unmittelbar durch die elektrische Maschine als Generator versorgt werden, und zwar bei einer Hochspannung, die beispielsweise 10V bis 42 V beträgt.

Außerdem kann das Niederspannungsbordnetz, insbesondere über den DC/DC-Wandler aus dem Hochspannungsbordnetz, mit einer Niederspannung gespeist werden, um Niederspannungsverbraucher zu versorgen, wobei die Niederspannung beispielsweise etwa 10V bis 16V beträgt.

Ferner lässt sich auch Energie in einem Energiespeicher des Bordnetzes, und zwar des Niederspannungsbordnetzes und/oder des Hochspannungsbordnetzes, speichern. Dabei ist eine konventionelle Batterie als Energiespeicher des Niederspannungsbordnetzes und ein Kondensator oder eine Leistungsbatterie als Energiespeicher des Hochspannungsbordnetzes bevorzugt.

Um bei dem Rekuperationsmodus eine genügende Pufferspeicherleistung des Energiespeichers zur Aufnahme von gewonnener Rekuperationsenergie sicherzustellen, wird die elektrische Maschine außerhalb des Rekuperationsmodus, insbesondere beim generatorischen Standardbetriebsmodus, bei einer generatorischen Spannung zwischen etwa ein Drittel und etwa zwei Drittel einer maximal zulässigen generatorischen Spannung betrieben. Der Energiespeicher wird also vorzugsweise außerhalb des Rekuperationsmodus nicht vollständig geladen, sodass bei dem Rekuperationsmodus eine verbleibende Ladekapazität des Energiespeichers zur Aufnahme der Rekuperationsenergie verfügbar ist.

Gemäß einer weiteren bevorzugten Ausführungsform kann das System in einem Hochspannungsmodus betrieben werden, wobei die elektrischen Maschine generatorisch zur Erzeugung der Hochspannung betrieben wird, und zwar insbesondere mit einer erhöhten Leerlaufdrehzahl der Brennkraftmaschine des Kraftfahrzeugs. Durch den Hochspannungsmodus kann das Hochspannungsbordnetz, insbesondere auch ein Hochspannungsverbraucher, unmittelbar mit elektrischer Leistung von der als Generator betriebenen elektrischen Maschine versorgt werden. Die Brennkraftmaschine des Kraftfahrzeugs wird während des Hochspannungsmodus vorzugsweise mit der, insbesondere gegenüber dem generatorischen Standardbetriebsmodus, erhöhten Leerlaufdrehzahl betrieben, um eine Generatorspannung der elektrischen Maschine zu erhöhen, die proportional zu einer Drehzahl der elektrischen Maschine ist, wobei die Drehzahlen der elektrischen Maschine und der Brennkraftmaschine aufgrund derer Kopplung gekoppelt sind. So lässt sich die Versorgung des Hochspannungsverbrauchers sicherzustellen. Im Übrigen kann ein solcher Hochspannungsverbraucher beispielsweise eine Schnellheizung des Fahrzeugsinnenraums oder auch eine Scheibenheizung sein.

Ferner lässt sich die Leistung eines Verbrauchers, insbesondere des Hochspannungsverbrauchers, über die Generatorspannung steuern, und insbesondere auch erhöhen. Beispielsweise kann eine Lüfterleistung eines elektrisch betriebenen Lüfters durch Steuern der Generatorspannung gesteuert werden, und insbesondere durch Erhöhen der Leerlaufdrehzahl der Brennkraftmaschine erhöht werden. So kann auf eine separate Steuerung des Verbrauchers, beispielsweise eine PWM- oder stufenförmige Ansteuerung des Lüfters, verzichtet werden.

Im Übrigen wird während des Hochspannungsmodus vorzugsweise ein kleinerer Erregerstrom und/oder eine kleinere Erregerspannung, insbesondere gegenüber dem Rekuperationsmodus, eingestellt, da der Hochspannungsmodus auch über längere Zeit eingenommen wird, sodass eine Überschreitung von dauerhaft zulässigen Werten verhindert wird.

Gemäß einer weiteren bevorzugten Ausführungsform kann das System in einem Versorgungsmodus betrieben werden, wobei die elektrische Maschine motorisch, also als Motor, betrieben wird. Insbesondere über die Kopplung, beispielsweise den Riementrieb, können in dem Versorgungsmodus Komponenten des Kraftfahrzeugs mit der elektrischen Maschine als Motor antreiben werden. So kann beispielsweise eine Klimaanlage angetrieben werden, und zwar insbesondere während eines Stillstands der Brennkraftmaschine, vorzugsweise bei einem Start-Stopp-Betrieb des Kraftfahrzeugs, bei dem während einer kurzen Haltephase des Fahrzeugs, die Brennkraftmaschine ausgeschaltet wird. Dabei kann die elektrische Maschine aus dem Energiespeicher versorgt werden, und zwar beispielsweise von dem Niederspannungsbordnetz oder, vorzugsweise, von dem Hochspannungsbordnetz.

Gemäß einer weiteren bevorzugten Ausführungsform wird das System in einem Antriebsmodus betrieben, wobei die elektrische Maschine motorisch betrieben wird, insbesondere zumindest zur Unterstützung eines Antriebs oder zum Direktantrieb des Kraftfahrzeugs. Durch den Antriebsmodus kann beispielsweise eine Antriebsleistung für das Kraftfahrzeug erhöht werden, indem das Kraftfahrzeug zusätzlich zur Brennkraftmaschine auch durch die elektrische Maschine angetrieben wird. Dieses Verfahren wird auch als "boosten" bezeichnet. Außerdem lässt sich so Rekuperationsenergie aus einem vorhergehenden Rekuperationsmodus, die, beispielsweise als elektrische Energie in dem Energiespeicher, in dem System gespeichert ist, in Bewegungsenergie des Kraftfahrzeugs umwandeln, beispielsweise um einen Kraftstoffverbrauch zu reduzieren. Außer der genannten Unterstützung der Brennkraftmaschine ist auch ein Direktantrieb des Kraftfahrzeugs durch die elektrische Maschine, insbesondere bei ausgeschalteter Brennkraftmaschine oder während diese gestartet wird, möglich, beispielsweise für kurze Fahrstrecken oder ein zügiges Losfahren, vorzugsweise bei dem Start-Stopp-Betrieb des Kraftfahrzeugs.

Vorzugsweise wird vor dem Antriebsmodus ein Ladezustand des Energiespeichers überprüft und der Antriebsmodus nur dann zugelassen, falls die gespeicherte Energie für den motorischen Betrieb der elektrischen Maschine und gleichzeitig für die Versorgung des Bordnetzes, insbesondere des Niederspannungsbordnetzes, ausreicht. Dazu kann eine Bordnetzspannung, insbesondere die Hochspannung und/oder die Niederspannung, mit einer für den Antriebsmodus minimal zulässigen Spannung verglichen werden.

Ferner ist bevorzugt, dass während des Antriebsmodus die Erregerspannung der elektrischen Maschine über den Maximalwert der Erregerspannung im generatorischen Standardbetrieb erhöht wird, um ein höheres Drehmoment, insbesondere ein Antriebsmoment, der elektrischen Maschine zu erzielen. Dies ist, wie nachfolgend erläutert, zulässig, da es sich bei dem Antriebsmodus um einen zeitlich beschränkten Betriebsmodus des Systems handelt.

Gemäß einer weiteren bevorzugten Ausführungsform wird das System in einem Startmodus betrieben, wobei die elektrische Maschine motorisch zum Starten der Brennkraftmaschine des Kraftfahrzeugs betrieben wird. Somit ist die elektrische Maschine auch als Startermotor für die Brennkraftmaschine nutzbar, nämlich vorzugsweise bei einem Start-Stopp-Betrieb des Kraftfahrzeugs, und zwar insbesondere auch zusätzlich zu einem konventionellen Niederspannungsstarter, der vorzugsweise über das Niederspannungsbordnetz für einen Kaltstart betrieben wird, während die elektrische Maschine, vorzugsweise über das Hochspannungsbordnetz, als Startermotor für einen Warmstart betrieben wird.

Vorzugsweise wird während des Startmodus die Erregerspannung der elektrischen Maschine über den Maximalwert der Erregerspannung im generatorischen Standardbetrieb erhöht, um ein höheres Drehmoment, insbesondere ein Startmoment, zu erreichen. Dies ist, wie nachfolgend erläutert, zulässig, da der Startmodus einen zeitlich beschränkten Betriebsmodus darstellt.

Bei einem motorischen Betriebsmodus, insbesondere beim Antriebs- und/oder beim Startmodus, bei dem die elektrische Maschine als Motor betrieben wird, kann die elektrische Maschine zwar auch mit der Niederspannung betrieben werden, vorzugsweise wird sie jedoch, wie zuvor genannt, bei einer höheren Spannung, insbesondere der Hochspannung des Hochspannungsbordnetzes, betrieben, um das Drehmoment oder auch einen Wirkungsgrad zu erhöhen.

Bei dem motorischen Betriebsmodus wird die elektrische Maschine vorzugsweise aus dem Energiespeicher, insbesondere des Hochspannungsbordnetzes, gespeist, wobei der Energiespeicher eine Batterie und/oder einen Kondensator, beispielsweise einen sogenannten Supercap, umfassen kann. Vorzugsweise wird vor und/oder während dem Startmodus geprüft, ob in dem Energiespeicher genügend Energie zum Starten der Brennkraftmaschine gespeichert ist, beispielsweise indem geprüft wird, ob eine Spannung des Energiespeichers über einem gewissen Grenzwert liegt. Dann kann ein Start-Stopp-Betrieb, und zwar insbesondere ein Stopp der Brennkraftmaschine, zugelassen werden, da das Starten der Brennkraftmaschine sichergestellt ist. Ferner werden vorzugsweise zumindest ein, möglichst viele oder alle Hochspannungsverbraucher bei einem Stillstand der Brennkraftmaschine, insbesondere während des Startmodus und/oder vorzugsweise während des Start-Stopp-Betriebs, ausgeschaltet. So verbleibt mehr Energie für den motorischen Betriebsmodus der elektrischen Maschine.

Zusätzlich oder auch alternativ, insbesondere falls die zuvor genannte Prüfung des Energiespeichers negativ ist, kann der DC/DC-Wandler so betrieben werden, dass er die Niederspannung zu einer höheren Spannung umwandelt, und zwar vorzugsweise zumindest auf einen minimalen Spannungswert zum motorischen Betreiben der elektrischen Maschine, insbesondere als Startermotor. Dabei wird also die Stromrichtung des DC/DC-Wandlers beim Stillstand der Brennkraftmaschine gegenüber einem generatorischen Betriebsmodus der elektrischen Maschine umgekehrt. Ferner kann so die Energie zum Starten der Brennkraftmaschine dem Niederspannungsbordnetz entnommen werden.

Im Übrigen kann ein Ladezustand des Energiespeichers, insbesondere bezüglich eines minimal zulässigen Wertes, überprüft werden. Alternativ kann das System, insbesondere der Energiespeicher, mit einem Ladezustandsensor, beispielsweise einem Batteriesensor, ausgebildet sein, um den Ladezustand zu überprüfen. Ferner kann auch ein Spannungseinbruch aufgrund des Startmodus vorausberechnet werden und geprüft werden, ob er einen kritischen Wert unterschreitet. So lässt sich bei dem Start-Stopp-Betrieb des Kraftfahrzeugs ein Stopp der Brennkraftmaschine unterdrücken, da ein Ausschalten der Brennkraftmaschine den Ladezustand des Leistungsspeichers des Niederspannungsbordnetzes zusätzlich verschlechtern würde.

Ferner kann beim Startmodus, insbesondere mittels des Energiespeichers, Rekuperationsenergie zum Starten der Brennkraftmaschine genutzt werden, beispielsweise bei dem Start-Stopp-Betrieb, bei dem die Brennkraftmaschine bei kurzen Haltephasen des Kraftfahrzeugs ausgeschaltet wird und für eine Weiterfahrt, vorzugsweise mit der elektrischen Maschine als Startermotor, wieder gestartet wird.

Gemäß einer bevorzugten Ausführungsform ist das System, insbesondere die Steuerung, mit einer Erfassungseinrichtung für zumindest eine Betriebsgröße, insbesondere einen Erregerstrom, eine Drehzahl, eine Generatorspannung, ein Tastverhältnis der Erregerkreisendstufe, eine Bauteiltemperatur, einen Abgabestrom des Generators, einen Strom in einer Phase, und/oder einen Strom in einem Brückengleichrichterzweig, und mit einer Auswerteeinrichtung zum Ableiten des Drehmoments oder der Information über das Drehmoment der elektrischen Maschine aus zumindest der Betriebsgröße oder einer Kombination von Betriebsgrößen ausgebildet. Vorzugsweise kann mit der Erfassungseinrichtung also zumindest eine Betriebsgröße erfasst und mit der Auswerteeinrichtung das Drehmoment oder die Information über das Drehmoment aus zumindest der Betriebsgröße oder einer Kombination von Betriebsgrößen abgeleitet werden. Die Betriebsgrößen stellen also Daten dar, aus denen das Drehmoment ableitbar ist.

Dabei ist bevorzugt, das Drehmoment aus der Generatorspannung oder auch aus einer der folgenden Kombination der Betriebsgrößen abzuleiten oder zu berechnen, nämlich insbesondere aus der Generatorspannung, dem Abgabestrom und der Drehzahl; der Generatorspannung, dem Erregerstrom und der Drehzahl; der Generatorspannung, dem Tastverhältnis der Erregerkreisendstufe, der Bauteiltemperatur und der Drehzahl; der Generatorspannung, dem Strom in einer Phase und der Drehzahl der Generatorspannung, dem Strom in einem Brückengleichrichterzweig und der Drehzahl.

Wie zuvor genannt, kann eine Information über ein zukünftiges Drehmoment berechnet und berücksichtigt werden. Die Berechnung kann anhand der zuvor genannten Betriebsgrößen des Systems und/oder weiteren Betriebsgrößen, insbesondere einer Kondensatorkapazität oder einer Spannung an einem Kondensator, erfolgen. Dabei wird das Drehmoment vorzugsweise aus der Generatorspannung oder auch aus einer der folgenden Kombination der Betriebsgrößen berechnet, nämlich aus der Generatorspannung, dem Abgabestrom, der Drehzahl und der Kondensatorkapazität; der Generatorspannung, dem Erregerstrom, der Drehzahl und der Kondensatorkapazität; der Generatorspannung, dem Tastverhältnis der Erregerkreisendstufe, der Bauteiltemperatur, der Drehzahl und der Kondensatorkapazität; der Generatorspannung, dem Strom in einer Phase, der Drehzahl und der Kondensatorkapazität; der Generatorspannung, dem Strom in einem Brückengleichrichterzweig, der Drehzahl und der Kondensatorkapazität.

Das Drehmoment und/oder auch das zukünftige Drehmoment können über zumindest ein Kennfeld und/oder eine Näherungsformel von der Steuerung berechnet werden, und zwar insbesondere aus einer oder einer Kombination der Betriebsgröße(n). Es können auch entsprechende Kennfelder oder Formeln zumindest zweier elektrischer Maschinen hinterlegt sein, wobei insbesondere eine jeweilige elektrische Maschine, beispielsweise über eine Schnittstelle und/oder anhand eines Identifikationscodes, ermittelbar ist, insbesondere indem der Identifikationscode, vorzugsweise an das Steuergerät mit der Auswerteeinrichtung, übermittelt wird.

Bei einer weiteren bevorzugten Ausführungsform wird ein Schlupf der Kopplung zwischen der elektrischen Maschine und der Brennkraftmaschine des Kraftfahrzeugs erkannt, und zwar insbesondere indem eine Drehzahl der elektrischen Maschine mit einer Drehzahl der Brennkraftmaschine verglichen wird. Dabei lässt sich die Drehzahl der elektrischen Maschine beispielsweise über einen Resolver oder über ein Spannungssignal einer oder mehrerer Phasen der elektrischen Maschine ermitteln. Dann lässt sich, insbesondere bei dem Rekuperationsmodus, das Drehmoment über eine Begrenzung des Erregerstroms oder des Tastverhältnisses begrenzen, um den Schlupf zu reduzieren oder sogar zu verhindern.

Außerdem lässt sich der Schlupf als ein Fehlerzustand ermitteln und bei einem Betriebsmodus des Systems berücksichtigen, beispielsweise indem von der Steuerung eine Fehlermeldung in dem System abgesetzt wird.

Bei einer weiteren bevorzugten Ausführungsform ist die elektrische Maschine mit der Brennkraftmaschine über einen Riementrieb mit einem Riemen gekoppelt und umfasst das System einen, insbesondere elektrischen, Riemenspanner für den Riemen. Dann kann der Schlupf reduziert oder auch eliminiert werden, indem eine Riemenspannung erhöht wird, und zwar vorzugsweise so lange, bis kein Schlupf mehr auftritt. Vorzugsweise wird vor oder auch während des Rekuperationsmodus, des Antriebsmodus und/oder auch des Startmodus die Riemenspannung mit dem Riemenspanner erhöht, um das Drehmoment möglichst schlupffrei zu übertragen.

Wird die elektrische Maschine, beispielsweise ein Kohleschleifringsystem der elektrischen Maschine, bei einem Betriebsmodus, insbesondere dem Rekuperations-, dem Hochspannungs-, dem Antriebs- und/oder dem Startmodus, nur kurzfristig belastet, so kann dabei ein dauerhaft zulässiger Maximalwert, beispielsweise die Erregerspannung oder der Erregerstrom, überschritten werden. So wird insbesondere eine Überhitzung bei kurzfristiger Überschreitung des Maximalwerts aufgrund einer Wärmekapazität und einer nachfolgenden Wärmeabgabe nach dem kurzfristigen Betriebsmodus verhindert und ein Verschleiß oder eine Lebensdauer nicht oder nur unwesentlich erhöht beziehungsweise verkürzt.

Gemäß einer weiteren bevorzugten Ausführungsform wird der DC/DC-Wandler in seiner Funktionsweise, insbesondere durch die Steuerung, überwacht. Dazu kann die Niederspannung des Niederspannungsbordnetzes erfasst und ausgewertet werden, und zwar beispielsweise durch das Steuergerät der elektrischen Maschine.

Im Übrigen kann die Steuerung, insbesondere das Steuergerät der elektrischen Maschine, über einen Sensepfad zur Erfassung der Niederspannung des Niederspannungsbordnetzes ausgebildet sein. Alternativ dazu kann die Niederspannung mit einem weiteren Steuergerät überwacht beziehungsweise erfasst werden und der Wert der Niederspannung oder auch eine Information über ein Überschreiten des zulässigen Maximalwertes über eine Schnittstelle übertragen werden.

Ferner ist bevorzugt, dass das System einen Überbrückungsschalter zum Überbrücken des DC/DC-Wandlers aufweist, sodass das Hochspannungsbordnetz und das Niederspannungsbordnetz direkt miteinander verbindbar sind. Vorzugsweise werden dann das Niederspannungsbordnetz und das Hochspannungsbordnetz mit der Niederspannung betrieben und insbesondere von der generatorisch betriebenen elektrischen Maschine gespeist, indem diese die Niederspannung erzeugt.

Eine Fehlfunktion des DC/DC-Wandlers kann festgestellt werde, indem ein Überschreiten der Niederspannung über einen zulässigen Maximalwert der Niederspannung ermittelt wird. Dann kann automatisch der Rekuperationsmodus gestoppt werden und/oder die Generatorspannung der generatorisch betriebenen elektrischen Maschine an die Niederspannung angeglichen oder auch auf einen Sollwert der Niederspannung gesenkt werden. Dazu kann der DC/DC-Wandler mit dem Überbrückungsschalter überbrückt werden, um das Niederspannungsbordnetz direkt mit elektrischer Leistung aus der generatorisch betriebenen elektrischen Maschine zu versorgen. Falls der Überbrückungsschalter geschlossen ist, also der DC/DC-Wandler überbrückt ist, darf das System nur in den Grenzen der zulässigen Spannung des Niederspannungsnetzes rekupieren.

Falls die Niederspannung einen minimal zulässigen Spannungswert unterschreitet, kann der Überbrückungsschalter ebenfalls geschlossen werden, also der DC/DC-Wandler überbrückt werden, und die Generatorspannung der generatorisch betriebenen elektrischen Maschine an die Niederspannung angepasst werden, wobei dieser Fehlerfall dadurch bedingt sein kann, dass der DC/DC-Wandler keine Leistung mehr überträgt. Vorzugsweise wird dabei ein Stopp der Brennkraftmaschine bei dem Start-Stopp-Betrieb unterdrückt, da ein Ausschalten der Brennkraftmaschine den Ladezustand des Energiespeichers zusätzlich verschlechtern würde.

Die Niederspannung kann zwischen 10 Volt und 16 Volt liegen. Im Übrigen sind an das Niederspannungsbordnetz vorzugsweise das Steuergerät der Bremssicherheitsvorrichtung, das Batteriesteuergerät, eine konventionelle Batterie, ein Niederspannungsstarter für einen Kaltstart der Brennkraftmaschine und/oder auch weitere Niederspannungsverbraucher angeschlossen.

Bei einer weiteren bevorzugten Ausführungsform werden mit dem DC/DC-Wandler Spannungsspitzen in dem Bordnetz, insbesondere in dem Niederspannungsbordnetz, gesenkt. Werden induktive Lasten in dem Bordnetz abgeschaltet, kann es zu Spannungsüberhöhungen kommen. Um diese zu minimieren ist es vorteilhaft, wenn ab einer maximal zulässigen Spannung des Bordnetzes der DC/DC-Wandler Energie aus dem Bordnetz transferiert, wobei vorzugsweise mit diesem Verfahren Spannungsüberhöhungen des Niederspannungsbordnetzes reduziert werden, indem mit dem DC/DC-Wandler Energie in das Hochspannungsbordnetz transferiert wird. Ein solches Verfahren wird auch als "load dump" bezeichnet.

Dabei wird vorzugsweise die Spannung des Bordnetzes so gefiltert, dass Spannungsspitzen, die durch das Abschalten einer induktiven Last verursacht sind, von andersartig verursachten Spannungsschwankungen unterscheidbar sind.

Gemäß einer weiteren bevorzugten Ausführungsform ist die elektrische Maschine als Wechselstrommotorgenerator ausgebildet, und zwar insbesondere mit einer Erregerwicklung und einer elektronischen Schaltungsanordnung. Dabei umfasst die elektrische Schaltungsanordnung vorzugsweise das Steuergerät der elektrischen Maschine und/oder auch einen Gleichrichter und einen Wechselrichter. Um Überspannungen beim Abschalten der Erregerwicklung zu vermeiden, kann parallel zu der Erregerwicklung eine Freilaufdiode geschaltet sein.

Ferner kann die elektrische Maschine, insbesondere deren Steuergerät, eine Drehzahlerfassungseinrichtung zum Erfassen der Drehzahl der elektrischen Maschine aufweisen. Dabei kann eine Wechselspannung über der Erregerwicklung, insbesondere an dem Gleich- und/oder Wechselrichter, abgegriffen werden und aus deren Frequenz die Drehzahl berechnet werden. Außerdem kann das System, insbesondere die elektrische Maschine, einen Sensor für ein Winkellagesignal eines Rotors der elektrischen Maschine umfassen und aus dem Winkellagesignal eine Drehzahl abgeleitet werden.

Im Übrigen kann die Steuerung, insbesondere das Steuergerät der elektrischen Maschine, mit zumindest einer Schnittstelle zur Übermittlung von Daten ausgebildet sein. So lassen sich Daten, insbesondere die zuvor und nachfolgend genannten Informationen über das Drehmoment, zwischen zumindest zwei Steuergeräten, beispielsweise dem Steuergerät der elektrischen Maschine und dem Steuergerät des DC/DC-Wandlers, dem Motorsteuergerät, dem Batteriesteuergerät und/oder auch dem Steuergerät der Bremssicherheitsvorrichtung, übermitteln, wobei auch über eine einzige Schnittstelle Daten zu und/oder von zumindest zwei weiteren Steuergeräten übermittelbar sind, insbesondere auch indirekt über ein weiteres Steuergerät, insbesondere ein zentrales Steuergerät des Systems oder des Motorsteuergeräts.

Die elektrische Maschine als Wechselstrommotorgenerator kann mit drei phasenbildenden Wicklungssträngen ausgebildet sein. Im Übrigen kann die elektrische Maschine fünfphasig ausgebildet sein. Vorzugsweise ist die elektrische Maschine siebenphasig ausgebildet.

*Höhere Phrasenzahlen verringern die Verluste im Rotor und führen zu einer besseren Verteilung des Stroms auf die Schalter des Wechselrichters.*

Die Aufgabe wird auch durch ein Computerprogrammprodukt gelöst, das in einen Programmspeicher mit Programmbefehlen, insbesondere eines Mikrocomputers, für das System oder für die Steuerung ladbar ist, um alle Schritte eines zuvor oder nachfolgend beschriebenen Verfahrens auszuführen, insbesondere wenn das Programm in der Steuerung ausgeführt wird. Dabei ist der Mikrocomputer vorzugsweise Bestandteil der Steuerung und der Programmspeicher vorzugsweise als ein Halbleiterspeicher ausgebildet, wobei die Steuerung, insbesondere bei einer Mehrzahl Steuergeräten des Systems, auch eine Mehrzahl Mikrocomputer und auch Speicher, sowie eine Mehrzahl Computerprogrammprodukte oder auch ein auf die Mehrzahl Steuergeräte verteilt realisiertes Computerprogrammprodukt aufweisen kann. Das Computerprogrammprodukt erfordert nur wenige oder keine zusätzlichen Bauteile in der Steuerung und lässt sich vorzugsweise als ein Modul in einer bereits vorhandenen Steuerung, insbesondere zur Steuerung des Rekuperationsmodus, des Hochspannungsmodus, des Antriebsmodus und/oder auch des Startmodus implementieren. Das Computerprogrammprodukt hat den weiteren Vorteil, das es leicht an individuelle und bestimmte Kundenwünsche anpassbar ist, sowie eine Verbesserung oder Optimierung einzelner Verfahrensschritte mit geringem Aufwand kostengünstig möglich ist.

Es versteht sich, dass die vorstehend genannten und nachstehend noch zu erläuternden Merkmale nicht nur in der jeweils angegebenen Kombination, sondern auch in anderen Kombinationen verwendbar sind.

### Kurze Beschreibung der Zeichnungen

Die Erfindung wird im Folgenden unter Bezugnahme auf die Zeichnungen näher erläutert. Es zeigen:
- Fig. 1: einen schematischen Schaltplan eines Systems mit einer Steuerung und elektrischer Maschine mit variabler Spannung,
- Fig. 2: eine Übersichtsdarstellung einiger Betriebsmodi des Systems,
- Fig. 3: ein Flussdiagramm mit Verfahrensschritten zur Fehlerüberwachung,
- Fig. 4: einen schematischen Schaltplan einer elektrischen Maschine mit Leistungselektronik,
- Fig. 5: einen schematischen Schaltplan einer elektrischen Maschine mit fünf phasenbildenden Wicklungssträngen,
- Fig. 6: einen schematischen Schaltplan einer elektrischen Maschine mit sieben phasenbildenden Wicklungssträngen und
- Fig. 7: einen Klauenpolgenerator in der Seitenansicht.

### Ausführungsformen der Erfindung

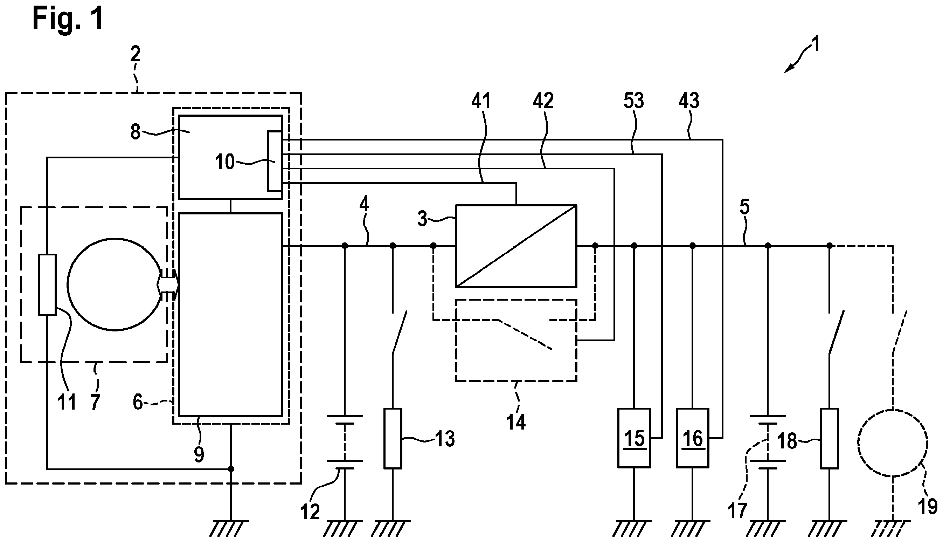

Die Fig. 1 zeigt einen schematischen Schaltplan eines Systems 1 für ein Kraftfahrzeug, das eine elektrische Maschine 2, ein Hochspannungsbordnetz 4, ein Niederspannungsbordnetz 5 und einen DC/DC-Wandler 3, der das Hochspannungsbordnetz 4 und das Niederspannungsbordnetz 5 verbindet, umfasst.

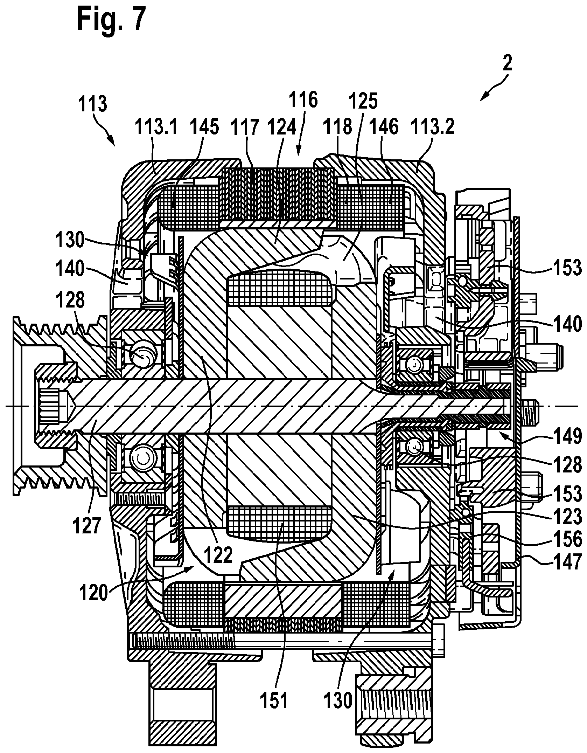

Die elektrische Maschine 2 ist als Wechselstrommaschine, und zwar als Wechselstrommotorgenerator, ausgebildet, die sowohl in einem generatorischen als auch in einem motorischen Betriebsmodus betreibbar ist. Dabei umfasst die elektrische Maschine 2 einen elektromechanischen, insbesondere elektromagnetisch aktiven, Teil 7, der eine Erregerwicklung 11 umfasst und in der Fig. 7 näher erläutert wird, und eine elektronische Schaltungsanordnung 6, die ein Steuergerät 8 mit Schnittstellen 10 und einen gesteuerten Gleichrichter/Wechselrichter 9, der beispielsweise als Pulswechselrichter ausgebildet ist, umfasst. Die elektrische Maschine 2 ist mit einer nicht dargestellten Brennkraftmaschine gekoppelt, und zwar über einen Riementrieb mit einem Riemen.

Das Steuergerät 8 steuert und regelt eine variable Ausgangsspannung der Leistungselektronik, nämlich des Gleichrichters/Wechselrichters 9, durch Beeinflussung eines Erregerstroms in der Erregerwicklung 11 mit Hilfe einer nicht dargestellten Endstufe. Ebenfalls nicht dargestellt ist eine parallel zur Erregerwicklung 11 geschaltete Freilaufdiode, um Überspannungen beim Abschalten der Erregerwicklung 11 zu vermeiden.

Die Schaltungsanordnung 6 umfasst ferner eine elektrische Verbindung zu Verschaltungspunkten 200, 201, 202 der Erregerwicklung 11, um während eines generatorischen Betriebs eine Drehzahl der als Generator betriebenen elektrischen Maschine 2 aus einer Frequenz einer Wechselspannung ableiten zu können. Zusätzlich erhält das Steuergerät 8 aus einem in der Fig. 1 nicht dargestellten Sensor 160 ein Winkellagesignal eines Rotors der elektrischen Maschine 2.

Über die Schnittstellen 10 können Daten zwischen dem Steuergerät 8 und weiteren Steuergeräten, die später erläutert sind, übermittelt werden. Bei diesem Ausführungsbeispiel erfolgt die Übermittlung der Daten zwischen jeweils zwei Steuergeräten über separate Datenleitungen 41, 43, 53. Alternativ könnte die Datenübermittlung auch über einen Datenbus und/oder verkettet geschaltete Steuergeräte, also indirekt über zumindest ein zwischengeschaltetes Steuergerät, realisiert sein.

Das Hochspannungsbordnetz 4 wird durch die elektrische Maschine 2 versorgt und umfasst einen Zweischichtkondensator 12 als Energiespeicher sowie zumindest einen zuschaltbaren Hochspannungsverbraucher 13, beispielsweise einen Motorlüfter oder eine Scheibenheizung. Eine Hochspannung des Hochspannungsbordnetzes 4 ist durch das Steuergerät 8 über den Gleichrichter/Wechselrichter 9 variabel, vorzugsweise zwischen 10V und 42V, regelbar. Dabei lässt sich durch Regeln der Hochspannung direkt auch eine Abgabeleistung des Hochspannungsverbrauchers 13 regeln.

Das Niederspannungsbordnetz 5 wird über den DC/DC-Wandler 3 mit einer Niederspannung versorgt, die vorzugsweise zwischen 10V und 16V liegt.

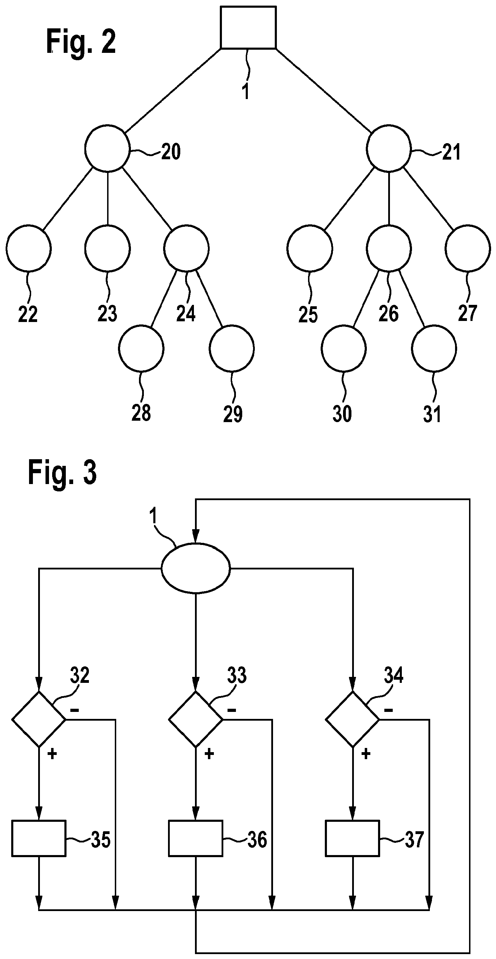

Bei einer Fehlfunktion des DC/DC-Wandlers 3 kann dieser, wie in der Fig. 3 näher erläutert, mittels eines Überbrückungsschalters 14 überbrückt und das Niederspannungsbordnetz 5 also direkt mit dem Hochspannungsbordnetz 4 verbunden werden, wobei dann beide Bordnetze 4, 5 mit der Niederspannung versorgt werden, indem der Gleichrichter/Wechselrichter 9 durch das Steuergerät 8 so angesteuert wird, dass die elektrische Maschine 2 nur noch die Niederspannung abgibt. Der Überbrückungsschalter 14 ist über eine Steuerleitung 42 ansteuerbar.

Der DC/DC-Wandler 3 umfasst ferner ein Steuergerät, über das insbesondere eine Richtung der Gleichspannungswandlung und einer Ausgangsspannung steuerbar sind. Das Steuergerät des DC/DC-Wandlers 3 ist über eine Datenleitung 41 mit dem Steuergerät 8 der elektrischen Maschine 2 verbunden.

An dem Niederspannungsbordnetz 5 sind ein Steuergerät einer Bremssicherheitsvorrichtung, nämlich ein ESP/ABS Steuergerät 15, ein Batteriesteuergerät 16 für einen weiteren Energiespeicher, nämlich eine herkömmliche Batterie 17, zumindest ein schaltbarer Niederspannungsverbraucher 18 und, optional, ein herkömmlicher Niederspannungsstarter 19 für einen Kaltstart einer nicht dargestellten Brennkraftmaschine des Kraftfahrzeugs angeschlossen.

Ferner sind jeweils das Batteriesteuergerät 16, um den Zustand der Batterie 17 abzufragen, und das ESP/ABS Steuergerät 15 mit Steuerleitungen 43, 53 über die Schnittstellen 10 mit dem Steuergerät 8 verbunden.

Die Fig. 2 zeigt eine Übersichtsdarstellung einiger Betriebsmodi (20-31) des Systems 1, zwischen denen abhängig von Betriebsanforderungen, insbesondere eines Betriebszustandes des Kraftfahrzeugs, variiert wird. Das System 1 mit der elektrischen Maschine 2 lässt sich prinzipiell in einem motorischen Betriebsmodus 20 oder in einem generatorischen Betriebsmodus 21 der elektrischen Maschine 2 betreiben. Dabei kann das System 1 bei dem motorischen Betriebsmodus 20 in einem sogenannten Versorgungsmodus 22, einem Startmodus 23 oder einem Antriebsmodus 24, bei dem ein sogenannter Boostmodus 28 und ein Direktantriebsmodus 29 unterscheidbar sind, betrieben werden. In dem generatorischen Betriebsmodus 21 kann das System 1 in einem generatorischen Standardbetriebsmodus 25, einem Rekuperationsmodus 26, bei dem ein Bremsmodus 30 und ein Schubmodus 31 unterscheidbar sind, und eine Hochspannungsmodus 27 betrieben werden.

Bei einem motorischen Betriebsmodus 20 wird die elektrische Maschine 2 mit elektrischer Energie über das Hochspannungsbordnetz 4 aus dem Zweischichtkondensator 12 oder auch mittels des DC/DC-Wandlers 3 aus der Batterie 17 des Niederspannungsbordnetzes 5 versorgt, wobei die elektrische Maschine 2, wie nachfolgend erläutert, als Motor dient.

Bei einem generatorischen Betriebsmodus 21 wird die elektrische Maschine 2 durch die Brennkraftmaschine des Kraftfahrzeugs angetrieben. Dabei lässt sich mit der elektrischen Maschine 2 elektrische Energie gewinnen und in das Hochspannungsbordnetz 4 und auch über den DC/DC-Wandler 3 in das Niederspannungsbordnetz 5 einspeisen.

Beim Versorgungsmodus 22 werden mit der elektrischen Maschine 2 als Motor Verbraucher des Kraftfahrzeugs, beispielsweise eine Klimaanlage, angetrieben, und zwar bei einem ausgeschalteten Zustand der Brennkraftmaschine, insbesondere während einer kurzen Haltephase des Kraftfahrzeugs bei einem Start-Stopp-Betrieb.

Beim Startmodus 23 wird die Brennkraftmaschine mittels der elektrischen Maschine 2 gestartet, und zwar mit einem Warmstart bei dem Start-Stopp-Betrieb des Kraftfahrzeugs. Dabei wird eine Erregerspannung der Erregerwicklung 11 gegenüber einem Maximalwert im generatorischen Standardmodus 25 erhöht, um ein höheres Startmoment zu erzielen. Dies ist zulässig, da das Starten der Brennkraftmaschine ein zeitlich beschränkten, insbesondere kurzfristiges, Ereignis ist, also die zulässigen Werte nur kurzfristig überschritten werden.

Im Übrigen wird für einen Startmodus 23 vorab geprüft, ob in dem Zweischichtkondensator 12 oder auch in der Batterie 17 genügend Energie zum Starten der Brennkraftmaschine gespeichert ist. Andernfalls wird bei einem Start-Stopp-Betrieb des Kraftfahrzeugs die Brennkraftmaschine nicht ausgeschaltet, also ein Start-Stopp-Zyklus unterdrückt. Ein Kaltstart der Brennkraftmaschine wird vorzugsweise mit dem Niederspannungsstarter 19 durchgeführt, kann jedoch auch durch die elektrische Maschine 2 erfolgen.

Primär wird beim Startmodus 23 die elektrische Maschine 2 mit Leistung aus dem Zweischichtkondensator 12 versorgt. Falls die in dem Zweischichtkondensator 12 gespeicherte Energie nicht zum Starten der Brennkraftmaschine ausreicht, erfolgt die elektrische Versorgung über die Batterie 17. Zum Überprüfen der Energiespeicher 12, 17 kann beispielsweise die Spannung des jeweiligen Bordnetzes 4, 5 gemessen und mit einem kritischen Wert verglichen werden. Alternativ kann ein Ladezustand der Batterie 17 auch mit einem Batteriesensor erfasst werden oder auch ein Spannungseinbruch vorausberechnet und dieser mit einem kritischen Wert, beispielsweise einer minimalen Batteriespannung, verglichen werden.

Ferner werden bei einem Stillstand der Brennkraftmaschine vorzugsweise die Hochspannungsverbraucher 13 ausgeschaltet, um nicht unnötig Energie zu verbrauchen. Ferner kann die Hochspannung des Hochspannungsbordnetzes 4 auf einen minimalen Wert zum Starten der Brennkraftmaschine reduziert werden. Wird zusätzlich Energie aus dem Niederspannungsbordnetz 5 benötigt, so wird die Wandlungsrichtung des DC/DC-Wandlers 3 gegenüber eines generatorischen Betriebsmodus 21 umgekehrt, also Energie aus dem Niederspannungsbordnetz 5 in das Hochspannungsbordnetz 4 transferiert.

In dem Antriebsmodus 24 wird die elektrische Maschine 2 motorisch betrieben, und zwar um in dem Boostmodus 28 die Brennkraftmaschine zu unterstützen oder in dem Direktantriebsmodus 29 das Kraftfahrzeug direkt anzutreiben. In dem Boostmodus 28 wird also die Antriebsleistung der Brennkraftmaschine um eine Antriebsleistung der elektrischen Maschine 2 ergänzt und somit insgesamt eine Antriebsleistung des Kraftfahrzeugs erhöht. In dem Direktantriebsmodus 29 wird das Kraftfahrzeug ohne Unterstützung durch die Brennkraftmaschine mittels der elektrischen Maschine 2 angetrieben, und zwar beispielsweise für kurze Fahrstrecken und/oder für ein zügiges Anfahren bei einem Start-Stopp-Betrieb, insbesondere bis die Brennkraftmaschine gestartet ist.

Der Antriebsmodus 24, insbesondere der Boostmodus 28 und/oder der Direktantriebsmodus 29, werden dabei nur ausgeführt, falls in dem Bordnetz 4, 5 genügend elektrische Energie zur Verfügung steht, sodass insbesondere gleichzeitig die Versorgung der Bordnetze 4, 5 gewährleistet ist. Dazu kann geprüft werden, ob die Hochspannung und/oder die Niederspannung größer als ein gewisser Grenzwert sind, ab dem der entsprechende Antriebsmodus 24, 28, 29 sinnvoll möglich ist.

Im generatorischen Standardbetriebsmodus 25 wird die elektrische Maschine 2 als Generator durch die Brennkraftmaschine angetrieben, und zwar bei einem regulären Fahrbetrieb, bei dem durch die Verbrennung eines Kraftstoffs von der Brennkraftmaschine sowohl der Antrieb des Kraftfahrzeugs als auch der elektrischen Maschine 2 gewährleistet ist. So wird mit der elektrischen Maschine 2 vorzugsweise die Hochspannung erzeugt und unmittelbar das Hochspannungsbordnetz 4 mit Energie versorgt, wobei dabei die Generatorspannung etwa ein Drittel bis zwei Drittel einer maximal zulässigen Generatorspannung beträgt. Dann wird der Zweischichtkondensator 12 nicht mit seiner maximalen Kapazität aufgeladen, sodass er über genügend Pufferspeicherleistung für den Rekuperationsmodus 26 verfügt. Ferner werden die Hochspannungsverbraucher 13 versorgt und außerdem über den DC/DC-Wandler 3 das Niederspannungsbordnetz 5.

Bei dem Hochspannungsmodus 27 wird die Brennkraftmaschine mit einer Leerlaufdrehzahl betrieben, die gegenüber einer Leerlaufdrehzahl beim generatorischen Standardbetriebsmodus 25 erhöht ist, um eine sichere Versorgung der Hochspannungsverbraucher 13 zu gewährleisten, da die Generatorspannung 2 proportional zu der Drehzahl der elektrischen Maschine, also auch proportional zur Drehzahl der Brennkraftmaschine, ist. Ferner kann so die Leistung der Hochspannungsverbraucher 13 direkt über die Leerlaufdrehzahl der Brennkraftmaschine gesteuert werden, sodass eine separate Leistungssteuerung des Hochspannungsverbrauchers 13 nicht notwendig ist.

Während des Hochspannungsmodus 27 ist es sinnvoll, einen kleineren Erregerstrom der elektrischen Maschine 2 als beispielsweise bei dem Rekuperationsmodus 26 einzustellen, da der Hochspannungsmodus 27 auch über längere Zeit andauern kann. Vorzugsweise wird der zuvor genannte Maximalwert des Erregerstroms beim generatorischen Standardbetriebsmodus 25 nicht überschritten, um eine Schädigung der elektrischen Maschine 2 zu verhindern.

Beim Rekuperationsmodus 26 wird die elektrische Maschine 2 mit einem von dem Steuergerät 8 ansteuerbaren Drehmoment betrieben, um Bewegungsenergie des Kraftfahrzeugs mittels der elektrischen Maschine 2 als Generator in elektrische Energie umzuwandeln und diese vorzugsweise in dem Zweischichtkondensator 12 zu speichern. Außerdem kann die so gewonnene Energie auch in der Niederspannungsbatterie 17 gespeichert werden, wobei die Nieder-spannung des Niederspannungsbordnetzes 5 während des Rekuperationsmodus 26 erhöht wird, um durch einen verstärkten Stromfluss durch den DC/DC-Wandler 3 und auch die höhere Niederspannung mehr Energie in der Niederspannungsbatterie 17 zu speichern.

Im Übrigen wird dabei der Bremsmodus 30, bei dem ein, insbesondere starkes, abbremsendes Kraftfahrzeug erwünscht ist, und der Schubmodus 31, bei dem ein, insbesondere starkes, Abbremsen des Kraftfahrzeugs verhindert werden soll, unterschieden, sodass bei dem Schubmodus 31 das Drehmoment, also das Bremsmoment der elektrischen Maschine 2, limitiert wird und bei dem Bremsmodus 30 keine Drehmomentlimitation realisiert wird.

Durch das Drehmoment der generatorisch betriebenen elektrischen Maschine 2, insbesondere beim Rekuperationsmodus 26, kann eine Bremskraftverteilung des Kraftfahrzeugs deutlich gestört werden, da hohe Bremsmomente, beispielsweise 10 bis 17 Nm auf einer Welle der elektrischen Maschine 2 beziehungsweise 30 bis 50 Nm auf einer Kurbelwelle der Brennkraftmaschine, und zwar auch mit sehr hohen Gradienten, beispielsweise 1500 bis 5000 Nm pro Sekunde auf der Kurbelwelle, auf eine angetriebene Achse des Kraftfahrzeugs übertragen werden können. Deshalb wird das Drehmoment, insbesondere das Bremsmoment, in dem System berücksichtigt, und zwar vorzugsweise an das ESP/ABS Steuergerät 15 übermittelt, um eine Anpassung der Bremskraftverteilung vorzunehmen.

Dazu erhält das ESP/ABS Steuergerät 15 eine Informationen, die entweder direkt dem Drehmoment der elektrischen Maschine 2 entspricht, oder Daten, aus denen das Drehmoment ableitbar ist. Diese Daten können folgende Betriebsgrößen sein: der Erregerstrom IE, die Drehzahl ng, die Generatorspannung Ug, ein Tastverhältnis der Erregerkreisendstufe DF, eine Bauteiltemperatur Ta, ein Abgabestrom des Generators Ig, ein Strom in einer Phase Iph oder auch ein Strom in einem Brückengleichrichterzweig IGLR. Dabei sind folgende Kombinationen sinnvoll:
Ug, Ig, ng
Ug, le, ng
Ug, DF, Ta, ng
Ug, Ig, ng
Ug, Iph, ng
Ug
Ug, IGLR, ng.

Ferner kann das Drehmoment über Kennfelder oder auch über eine Näherungsformel berechnet werden, und zwar beispielsweise in dem Steuergerät 8, in einem Motorsteuergerät, in einem Bordnetzsteuergerät oder in dem ESP/ABS Steuergerät 15. Dabei ist das Kennfeld oder die Formel in dem Steuergerät hinterlegt oder es können auch Kennfelder beziehungsweise Formeln mehrerer elektrischer Maschinen 2 hinterlegt sein, wobei eine jeweilige elektrische Maschine 2 mit einem Identifikationscode, der über die Schnittstelle 10 übermittelt wird, zugeordnet werden.

Wird aufgrund einer Betriebsanforderung des Kraftfahrzeugs der Rekuperationsmodus 26, insbesondere von einem Steuergerät, angekündigt, wird der Verlauf des Drehmoments, also ein zukünftiges Drehmoment, berechnet und in dem ESP/ABS Steuergerät 15 berücksichtigt. Dabei kann die Berechnung anhand der zuvor genannten Betriebsgrößen durchgeführt werden, wobei außerdem auch eine Kondensatorkapazität C und/oder eine Kondensatorspannung UC am Zweischichtkondensator 12 berücksichtigt wird. Dementsprechend wird der Verlauf des Drehmoments vorzugsweise aus der Generatorspannung Ug oder aus den zuvor genannten Kombinationen jeweils in Verbindung mit der Kondensatorkapazität C abgeleitet.

Ist das Drehmoment oder auch der Gradient des Drehmoments, insbesondere in Schubmodus 31, zu hoch, wird das Tastverhältnis DF oder der Erregerstrom IE so beschränkt, dass das Drehmoment beziehungsweise der Gradient des Drehmoments in einen unkritischen Bereich fallen. Ferner kann auch der Gradient des Tastverhältnisses DF oder des Erregerstroms IE begrenzt werden.

Falls das ESP/ABS Steuergerät 15 eine kritische fahrdynamische Situation, beispielsweise eine schnelle Fahrt in einer Kurve, erkennt, unterdrückt das ESP/ABS Steuergerät 15 über die Schnittstelle 10 den Rekuperationsmodus 26, um das zusätzliche Bremsmoment der elektrischen Maschine 2 auf die Antriebsachse und damit einen instabilen Fahrzustand zu verhindern.

Bei der Kopplung der Brennkraftmaschine mit der elektrischen Maschine 2 kann ein Schlupf durch einen Vergleich einer Drehzahl der elektrischen Maschine 2 und einer Drehzahl der Kurbelwelle der Brennkraftmaschine erkannt werden und das Drehmoment der elektrischen Maschine 2, wie zuvor beschrieben, limitiert werden, um den Schlupf zu reduzieren oder zu verhindern. Ferner kann bei einem Schlupf eine entsprechende Fehlermeldung in dem System abgesetzt werden oder auch ein elektrischer Riemenspanner angesteuert werden, um die Riemenkraft solange zu erhöhen, bis kein Schlupf mehr auftritt.

Im Übrigen wird die Riemenspannkraft mit dem elektrischen Riemenspanner bereits vor einem Betriebsmodus, bei dem ein hohes Drehmoment erwartet wird, erhöht, um den Schlupf von vornherein möglichst zu vermeiden. Dies ist insbesondere bei dem Rekuperationsmodus 26, bei dem Boostmodus 28, bei dem Direktantriebsmodus 29 und/oder bei dem Startmodus 23 realisiert.

Ferner wird während dem Rekuperationsmodus 26 die Erregerspannung IE über einen Maximalwert im generatorischen Standardbetriebsmodus 25 gelegt, um ein höheres Bremsmoment und eine höhere Abgabeleistung der elektrischen Maschine 2 zu erreichen.

Die Fig. 3 zeigt ein Flussdiagramm mit Verfahrensschritten zum Betreiben des Systems 1, und zwar zur Fehlerüberwachung.

In einem Schritt 32 wird geprüft, ob die Niederspannung des Niederspannungsbordnetzes 5 einen zulässigen Maximalwert überschreitet, und zwar indem das Steuergerät 8 mit einem Sensepfad zur Erfassung der Niederspannung ausgebildet ist. So lässt sich eine Fehlfunktion des DC/DC-Wandlers 3 feststellen. Trifft dies zu, wird in einem Schritt 35 der Rekuperationsmodus 26 automatisch gestoppt und die Generatorspannung Ug auf einen Sollwert der Niederspannung gesenkt. Im Übrigen ist es möglich, die Generatorspannung Ug auch an die Niederspannung anzugleichen. Ferner wird der Überbrückungsschalter 14 geschlossen, sodass der DC/DC-Wandler 3 bei einer Fehlfunktion überbrückt wird und das Niederspannungsbordnetz 5 direkt von der elektrischen Maschine 2 als Generator versorgt wird. Alternativ zu dem Sensepfad ist es möglich, die Niederspannung über ein Steuergerät zu überwachen und den Wert der Niederspannung über eine Schnittstelle 10 zu übertragen.

Ferner wird in einem Schritt 33 geprüft, ob die Niederspannung einen zulässigen Minimalwert unterschreitet. Dies ist ein Indikator, dass der DC/DC-Wandler 3 keine Leistung mehr überträgt, also ebenfalls eine Fehlfunktion vorliegt. Dann wird in einem Schritt 36 die Generatorspannung Ug an die Niederspannung angeglichen und der Überbrückungsschalter 14 geschlossen. Zusätzlich wird bei einem Start-Stopp-Betrieb des Kraftfahrzeugs ein Motorstopp unterdrückt, da ein Ausschalten der Brennkraftmaschine einen Ladezustand der Niederspannungsbatterie 17 zusätzlich verschlechtern würde.

In einem Schritt 34 wird geprüft, ob eine Spannungsüberhöhnung im Niederspannungsbordnetz 5 aufgrund eines Abschaltens einer stark induktiven Last im Niederspannungsbordnetz 5 vorliegt, indem die Niederspannung entsprechend gefiltert wird, um solche Spannungsüberhöhungen zu erkennen. Trifft dies zu, wird in einem Schritt 37 mit dem DC/DC-Wandler 3 Energie aus dem Niederspannungsbordnetz 5 in das Hochspannungsbordnetz 4 transferiert, um die Spannungsüberhöhung zu reduzieren. Dabei wird also die Wandlungsrichtung des DC/DC-Wandlers 3 umgekehrt.

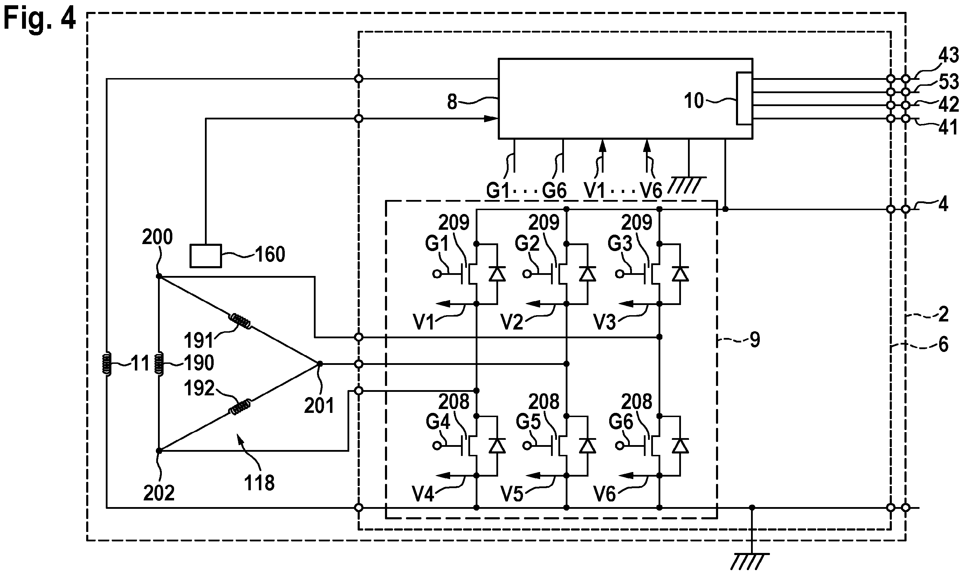

Die Fig. 4 zeigt einen Schaltplan einer elektrischen Maschine 2, die als Wechselstrommotorgenerator mit drei phasenbildenden Wicklungssträngen 190, 191, 192 ausgebildet ist. Die Gesamtheit aller Wicklungsstränge 190, 191, 192 bildet eine Statorwicklung 118. Die drei phasenbildenden Wicklungsstränge 190, 191, 192 sind an Verschaltungspunkten 200, 201, 202 zu einer Grundschaltung als Dreieck verschaltet, wobei sie einen Winkel von circa 60° el. einschließen.

Dabei sind die Wicklungsstränge 190, 191, 192 wie folgt verschaltet: Der Wicklungsstrang 190 ist am Verschaltungspunkt 200 mit dem Wicklungsstrang 191 verbunden. Der Wicklungsstrang 191 ist an seinem gegenüberliegenden Ende am Verschaltungspunkt 201 mit dem Wicklungsstrang 192 verbunden. Der Wicklungsstrang 192 ist an seinem gegenüberliegenden Ende am Verschaltungspunkt 202 mit dem Wicklungsstrang 190 verbunden. Die Verschaltungspunkte 200, 201, 202 befinden sich vorzugsweise axial auf oder neben einem elektronikseitigen Wickelkopf 146, um möglichst kurze Verschaltungswege zu realisieren. Hierzu treten jeweils zu verschaltende Anschlussdrähten der Wicklungsstränge 190, 191, 192 eines Verschaltungspunktes 200, 201, 202 vorzugsweise aus in Umfangsrichtung direkt benachbarten Nuten 119 aus.

Über die Anschlussdrähte sind die Wicklungsstränge 190, 191, 192 an den Verschaltungspunkten 200, 201, 202 mit dem Gleich-/Wechselrichter 9, nämlich einem Brückengleichrichter/Brückenwechselrichter, verbunden, der aus zumindest drei Lowsideschaltern 208 und drei Highsideschalter 209 aufgebaut ist. Die Anzahl der Lowsideschalter 208 und Highsideschalter 209 entspricht jeweils mindestens der Anzahl der phasenbildenden Wicklungsstränge 190, 191, 192. Dabei sind die Schalter vorzugsweise oder alternativ auch parallel geschaltet.

Die Lowsideschalter 208 und die Highsideschalter 209 sind vorzugsweise als MOS (Metalloxidhalbleiter) Transistoren, Bipolartransistoren, IGPT (Isolier-Gate-Bipolartransitoren) oder ähnliche Schaltbauteile ausgebildet. Insbesondere bei Bipolartransistoren oder IGPT als Lowsideschalter 208 oder Highsideschalter 209 sind jeweils Flächendioden parallel zu diesen so geschaltet, dass eine Gleichstromfließrichtung der Flächendioden jeweils gegenüber einer Gleichstromrichtung der Schaltbauteile umgekehrt ist.

Die Schaltbauteile der Highsideschalter 209 beziehungsweise der Lowsideschalter 208 sind vorzugsweise als Leistungstransistoren ausgebildet, deren Träger Elektronen sind, um Widerstandsverluste und Kosten zu reduzieren. Es werden also n-Kanal MOS-Transistoren in allen Arten von MOS-Transistoren, npn-Transistoren in allen Arten von Bipolartransistoren oder isolierte Gate-npn-Transistoren in allen Arten von IGPT ausgewählt.

Gleichspannungsseitig ist das Steuergerät 8 parallel geschaltet, das durch eine Beeinflussung des Stroms durch die Erregerwicklung 11 eine Generatorspannung Ug regelt. Das Steuergerät 8 kann zusätzlich noch eine Verbindung zum Gleich-/Wechselrichter 9 aufweisen, um eine Frequenz der Wechselspannung der durch die phasenbildenden Wicklungen 190, 191, 192 induzierten Spannung zu ermitteln und daraus eine aktuelle Drehzahl ng der elektrischen Maschine 2 zu ermitteln.

Im Übrigen ist das Steuergerät 8 zum Empfang eines Rotorpositionssignals mittels eine Sensors 160 zur Winkellagemessung, zum Empfangen von Signalen über eine Schnittstelle 10 und zum Empfang eines Steuersignals, welches von zumindest einem weiteren, in der Fig. 2 nicht dargestellten Steuergerät außerhalb der elektrischen Maschine 2 übermittelt wird, in Betrieb. Das Steuergerät 8 ist ferner in Betrieb, um Gatespannungen VG1 bis VG6 der Lowsideschalter 208 und der Highsideschalter 209 basierend auf den empfangenen Signalen zu erzeugen, wobei die erzeugten Gatespannungen VG1 bis VG6 an Gate-Anschlüsse G1 bis G6 der Lowsideschalter 208 und Highsideschalter 209 geschaltet werden, um jeweils einen Ein- sowie einen Ausschaltzustand dieser schaltbar zu steuern.

Ferner umfasst die Schaltungsanordnung 6 Senseleitungen V1 bis V6, die jeweils mit einem schaltbaren Ausgang der Highsideschalter 209 und Lowsideschalter 208 verbunden sind, um jeweils Spannungen über den Wicklungssträngen 190, 191, 192 zu erfassen. Aus einem Wechselspannungsverlauf dieser Spannungen wird von dem Steuergerät 8 die Drehzahl ng der elektrischen Maschine 2 berechnet.

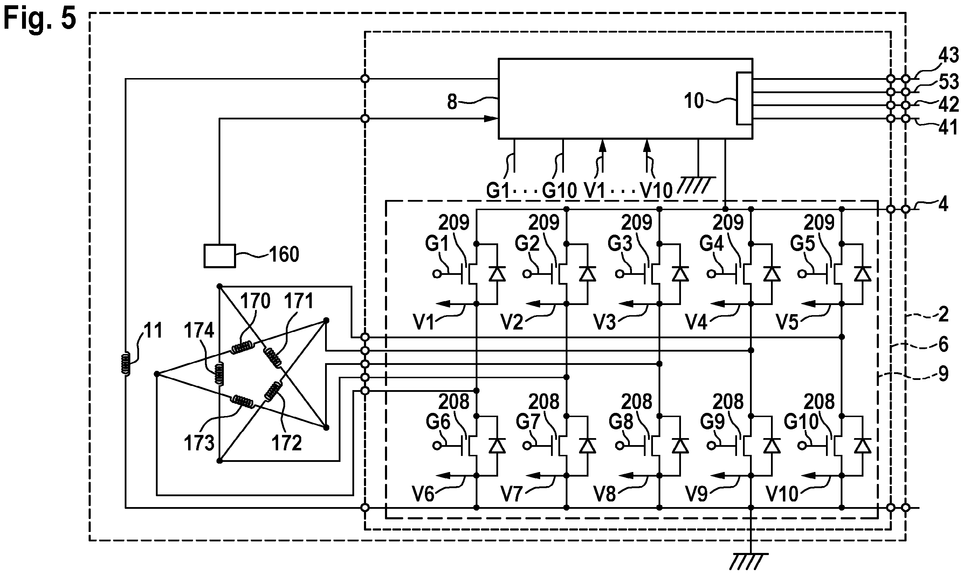

Die Fig. 5 zeigt einen Schaltplan einer elektrischen Maschine 2, die als ein Wechselstrommotorgenerator mit fünf phasenbildenden Wicklungssträngen 170 bis 174 ausgebildet ist. Die Gesamtheit dieser Wicklungsstränge 170 bis 174 bildet eine Statorwicklung 118, wobei die phasenbildenden Wicklungsstränge 170 bis 174 zu einer Grundschaltung als fünfzackiger Stern (Drudenfuß) verschaltet sind, wobei die jeweils in den Zacken verschalteten Wicklungsstränge 170 bis 174 einen Winkel von circa 36° el. einschließen. Im Übrigen trifft die Beschreibung des Ausführungsbeispiels der Fig. 4 analog auf dieses Ausführungsbeispiels zu, wobei dementsprechend der Gleich-/Wechselrichter 9 mit fünf Highsideschaltern 209 und fünf Lowsideschaltern 208 mit Gate-Anschlüsse G1 bis G10 und die Schaltungsanordnung 6 mit zehn Senseleitungen V1 bis V10 ausgebildet ist.

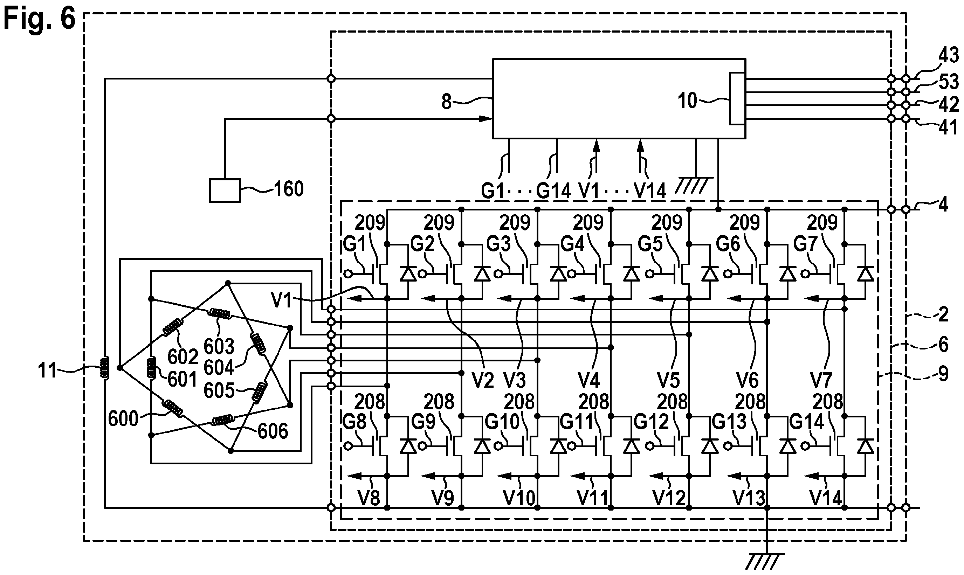

Die Fig. 6 zeigt einen Schaltplan einer elektrischen Maschine 2, die als Wechselstrommotorgenerator mit sieben phasenbildenden Wicklungssträngen 600 bis 606 in Analogie zu den in der Fig. 4 und der Fig. 5 dargestellten Ausführungsbeispielen ausgebildet ist. Dementsprechend ist der Gleich-/Wechselrichter 9 mit sieben Highsideschaltern 209 und sieben Lowsideschaltern 208 mit Gate-Anschlüsse G1 bis G14 und die Schaltungsanordnung 6 mit 14 Senseleitungen V1 bis V14 ausgebildet. Vorteile von mehrphasigen, insbesondere fünf oder siebenphasigen Maschinen sind, dass der Generatorenstrom sich auf mehrere Schalter verteilt, dadurch wird eine bessere Kühlung erreicht. Außerdem werden die Rotorverluste reduziert, da weniger Wirbelstromverluste entstehen und das Magnetgeräusch wird ebenfalls verringert.

Die Fig. 7 zeigt eine Schnittdarstellung einer elektrischen Maschine 2, die als ein Wechselstrommotorgenerator für ein Kraftfahrzeug ausgebildet ist. Der Wechselstrommotorgenerator 2 weist ein zweiteilige Gehäuse 113 auf, das ein erstes Lagerschild 113.1 und ein zweites Lagerschild 113.2 umfasst. Die Lagerschilder 113.1, 113.2 nehmen einen Stator 116 auf, der mit einem kreisringförmigen Blechpaket 117 ausgebildet ist, in dessen nach innen offenen und sich axial erstreckenden Nuten 119 die Statorwicklung 118 eingelegt ist. Der ringförmige Stator 116 umgibt mit seiner radial nach innen gerichteten Oberfläche einen elektromagnetisch erregten Rotor 120, der als Klauenpolläufer ausgebildet ist.

Der Rotor 120 umfasst unter anderem zwei Klauenpolplatinen 122, 123, an deren Außenumfang sich jeweils in axialer Richtung erstreckende Klauenpolfinger 124, 125 angeordnet sind. Dabei sind beide Klauenpolplatinen 122, 123 im Rotor 120 derart angeordnet, dass ihre sich in axialer Richtung erstreckenden Klauenpolfinger 124, 125 am Umfang des Rotors 120 einander als Nord- und Südpole abwechseln. So sind magnetisch erforderliche Klauenpolzwischenräume zwischen den gegenseitig magnetisierenden Klauenpolfingern 124, 125 realisiert, welche sich wegen der sich zu ihren freien Enden hin verjüngenden Klauenpolfingern 124, 125 leicht schräg zur Maschinenachse verlaufen. In diesen Klauenpolzwischenräumen können Permanentmagnete zur Streuflusskompensation eingebracht sein. Vereinfacht wird dieser Verlauf als axial bezeichnet.

Der Rotor 120 ist mittels einer Welle 127 und je einem auf je einer Rotorseite befindlichen Wälzlager 128 in jeweils den Lagerschilden 113.1, 113.2 drehbar gelagert. Er weist zwei axiale Stirnflächen auf, an denen jeweils ein Lüfter 130 befestigt ist. Die Lüfter 130 bestehen im Wesentlichen aus einem plattenförmigen beziehungsweise scheibenförmigen Abschnitt, von dem Lüfterschaufeln in bekannter Weise ausgehen. Die Lüfter 130 dienen dazu, über Öffnungen 140 in den Lagerschilden 113.1, 113.2 einen Luftaustausch zwischen einer Außenseite und einem Innenraum des Wechselstrommotorgenerators 2 zu ermöglichen. Dazu sind Öffnungen 140 an axialen Enden der Lagerschilder 113.1, 113.2 vorgesehen, über die mittels der Lüfter 130 Kühlluft in den Innenraum des Wechselstrommotorgenerators 2 eingesaugt wird. Die Kühlluft wird durch eine Rotation der Lüfter 130 radial nach Außen beschleunigt, sodass sie durch einen kühlluftdurchlässigen Wickelkopf 145 auf einer Antriebsseite und einen kühlluftdurchlässigen Wickelkopf 146 auf einer Elektronikseite hindurchtreten kann. Durch diesen Effekt werden die Wickelköpfe 145, 146 gekühlt. Die Kühlluft nimmt nach dem Hindurchtreten durch die Wickelköpfe 145, 146, beziehungsweise nach dem Umströmen dieser Wickelköpfe 145, 146, einen Weg radial nach Außen durch nicht dargestellte Öffnungen.

Ferner sind verschiedene Bauteile vor Umgebungseinflüssen durch eine Schutzkappe 147 geschützt. So deckt die Schutzkappe 147 beispielsweise eine Schleifringbaugruppe 149 ab, die eine Erregerwicklung 11 mit Erregerstrom versorgt. Um die Schleifringbaugruppe 149 herum ist ein Kühlkörper 153 angeordnet, der als Kühlkörper für einen gesteuerten Gleich-/Wechselrichter 9 und für ein Steuergerät 8 wirkt. Zwischen dem Lagerschild 113.2 und dem Kühlkörper 153 ist eine Anschlussplatte 156 angeordnet, welche Anschlussdrähte von Wicklungssträngen mit Anschlüssen des Steuergeräts 8 beziehungsweise des Gleich- /Wechselrichters 9 verbindet. Alle Figuren zeigen lediglich schematische nicht maßstabsgerechte Darstellungen. Im Übrigen wird insbesondere auf die zeichnerische Darstellungen für die Erfindung als Wesentlich verwiesen.

## Patentansprüche

1. Verfahren zum Betreiben eines Systems (1) für ein Kraftfahrzeug, wobei das System (1) eine Steuerung (8), ein Hochspannungsbordnetz (4), ein Niederspannungsbordnetz (5), einen DC/DC-Wandler (3), der das Hochspannungsbordnetz (4) und das Niederspannungsbordnetz (5) verbindet, und eine elektrische Maschine (2), insbesondere einen Starter- oder Motorgenerator, umfasst, **dadurch gekennzeichnet, dass** ein Betriebsmodus (20-31) des Systems (1) abhängig von Betriebsanforderungen, insbesondere eines Betriebszustands des Kraftfahrzeugs, variiert wird, wobei bei einem Schubbetrieb oder einem Bremsbetrieb des Kraftfahrzeugs, das System (1) in einem Rekuperationsmodus (26) betrieben wird, wobei die elektrische Maschine (2) mit einem von der Steuerung (8) ansteuerbaren Drehmoment betrieben wird, und zwar in Kommunikation mit einer Bremssicherheitsvorrichtung (15) des Kraftfahrzeugs, wobei die Bremssicherheitsvorrichtung ein Steuergerät aufweist,
wobei von der Steuerung (8) eine Information über das Drehmoment oder über ein zukünftiges Drehmoment der elektrischen Maschine (2) ermittelt und an das Steuergerät der Bremssicherheitsvorrichtung (15) übertragen wird,
wobei das Drehmoment und/oder ein Verlauf des zukünftigen Drehmoments von der Bremssicherheitsvorrichtung (15) berücksichtigt wird, um eine Anpassung einer Bremskraftverteilung vorzunehmen,
wobei in dem Rekuperationsmodus das Drehmoment erhöht wird, indem eine Niederspannung des Niederspannungsbordnetzes erhöht wird, so dass sich auch ein Strom durch den DC/DC-Wandler erhöht.

2. Verfahren nach Anspruch 1, **dadurch gekennzeichnet, dass** das System (1) in einem Hochspannungsmodus (27) betrieben wird, wobei die elektrische Maschine (2) generatorisch zur Erzeugung einer Hochspannung betrieben wird, und zwar insbesondere mit einer erhöhten Leerlaufdrehzahl einer Brennkraftmaschine des Kraftfahrzeugs.

3. Verfahren nach einem der Ansprüche 1 oder 2, **dadurch gekennzeichnet, dass** das System (1) in einem Antriebsmodus (24) betrieben wird, wobei die elektrische Maschine (2) zur Unterstützung eines Antriebs oder zum Direktantrieb des Kraftfahrzeugs motorisch betrieben wird.

4. Verfahren nach einem der Ansprüche 1 bis 3, **dadurch gekennzeichnet, dass** das System (1) in einem Startmodus (23) betrieben wird, wobei die elektrische Maschine (2) motorisch zum Starten der Brennkraftmaschine des Kraftfahrzeugs betrieben wird.

5. Verfahren nach einem der Ansprüche 1 bis 4, **dadurch gekennzeichnet, dass** das System (1) mit einer Erfassungseinrichtung und einer Auswerteeinrichtung ausgebildet ist, wobei mit der Erfassungseinrichtung zumindest eine Betriebsgröße erfasst wird und mit der Auswerteeinrichtung ein Drehmoment der elektrischen Maschine (2) aus zumindest der Betriebsgröße oder einer Kombination von Betriebsgrößen abgeleitet wird, wobei die Betriebsgröße durch eine der folgenden Größen gegeben ist:
- ein Erregerstrom (IE)
- eine Drehzahl (ng)
- eine Generatorspannung (Ug)
- ein Tastverhältnis der Erregerkreisendstufe (DF)
- eine Bauteiltemperatur (Ta)
- ein Abgabestrom des Generators (Ig)
- ein Strom in einer Phase (Iph)
- ein Strom in einem Brückengleichrichterzweig (IGLR)
- eine Kondensatorkapazität (C)
- eine Spannung am Kondensator (UC).

6. Verfahren nach einem der Ansprüche 1 bis 5, **dadurch gekennzeichnet, dass** mit dem DC/DC-Wandler (3) Spannungsspitzen in einem Bordnetz (4,5) gesenkt werden und/oder dass der DC/DC-Wandler (3) in seiner Funktionsweise überwacht wird, wobei die Niederspannung des Niederspannungsbordnetzes (5) erfasst und ausgewertet wird.

7. System (1) eines Kraftfahrzeugs, das eine Steuerung (8), ein Hochspannungsbordnetz (4), ein Niederspannungsbordnetz (5), einen DC/DC-Wandler (3), der das Hochspannungsbordnetz (4) und das Niederspannungsbordnetz (5) verbindet, und eine elektrische Maschine (2), insbesondere einen Starter- oder Motorgenerator, umfasst, **dadurch gekennzeichnet, dass** das System (1) ausgebildet ist, alle Schritte eines Verfahrens nach einem der Ansprüche 1 bis 6 auszuführen,
wobei die Steuerung (8) dazu eingerichtet ist, einen Betriebsmodus (20-31) des Systems (1) abhängig von Betriebsanforderungen, insbesondere eines Betriebszustands des Kraftfahrzeugs, zu variieren,
wobei das System (1) dazu eingerichtet ist bei einem Schubbetrieb oder einem Bremsbetrieb des Kraftfahrzeugs in einem Rekuperationsmodus (26) betrieben zu werden,
wobei die elektrische Maschine (2) dazu eingerichtet ist, mit einem von der Steuerung (8) ansteuerbaren Drehmoment betrieben zu werden, und zwar in Kommunikation mit einer Bremssicherheitsvorrichtung (15) des Kraftfahrzeugs, wobei die Bremssicherheitsvorrichtung ein Steuergerät aufweist,
wobei die Steuerung (8) dazu eingerichtet ist, eine Information über das Drehmoment oder über ein zukünftiges Drehmoment der elektrischen Maschine (2) zu ermitteln und an das Steuergerät der Bremssicherheitsvorrichtung (15) zu übertragen und
wobei die Bremssicherheitsvorrichtung (15) dazu eingerichtet ist, das Drehmoment und/oder einen Verlauf des zukünftigen Drehmoments zu berücksichtigen, um eine Anpassung einer Bremskraftverteilung vorzunehmen.

8. Computerprogramm, umfassend Befehle, die bewirken, dass das System nach Anspruch 7 die Verfahrensschritte nach einem der Ansprüche 1 bis 6 ausführt.

## Claims

1. Method for operating a system (1) for a motor vehicle, wherein the system (1) comprises a controller (8), a high-voltage on-board network (4), a low-voltage on-board network (5), a DC/DC converter (3) which connects the high-voltage on-board network (4) and the low-voltage on-board network (5), and an electrical machine (2), in particular a starter or motor generator,
**characterized in that** an operating mode (20-31) of the system (1) is varied depending on operating requirements, in particular of an operating state of the motor vehicle, wherein during a thrust operation or a braking operation of the motor vehicle, the system (1) is operated in a recuperation mode (26),
wherein the electrical machine (2) is operated with a torque which can be actuated by the controller (8), in communication with a brake safety device (15) of the motor vehicle, the brake safety device comprising a control unit,
wherein information about the torque or about a future torque of the electrical machine (2) is determined by the controller (8) and transmitted to the control unit of the brake safety device (15),
wherein the torque and/or a progression of the future torque is considered by the brake safety device (15) to perform an adjustment of a brake force distribution,
wherein the torque is increased in the recuperation mode by increasing a low-voltage of the low-voltage on-board network, so that a current via the DC/DC converter is increased.

2. Method according to claim 1, **characterized in that** the system (1) is operated in a high-voltage mode (27), wherein the electrical machine (2) is operated generatorically to generate a high voltage, in particular at an increased idle rotational speed of an internal combustion engine of the motor vehicle.

3. Method according to any one of claims 1 or 2, **characterized in that** the system (1) is operated in a drive mode (24), wherein the electrical machine (2) is operated motorically for supporting a drive or for direct drive of the motor vehicle.

4. Method according to any one of claims 1 to 3, **characterized in that** the system (1) is operated in a starting mode (23), wherein the electrical machine (2) is operated motorically for starting the internal combustion engine of the motor vehicle.

5. Method according to any one of claims 1 to 4, **characterized in that** the system (1) is provided with a detection device and an evaluation device, wherein at least one operating variable is detected with the detection device and a torque of the electric machine (2) is derived with the evaluation device from at least the operating variable or a combination of operating variables, wherein the operating variable is given by one of the following variables:
- an excitation current (IE)
- a rotational speed (ng)
- a generator voltage (Ug)
- a duty cycle of the exciter circuit output stage (DF)
- a component temperature (Ta)
- an output current of the generator (Ig)
- a current in a phase (Iph)
- a current in a bridge rectifier branch (IGLR)
- a capacitor capacity (C)
- a voltage at the capacitor (UC).

6. Method according to any one of claims 1 to 5, **characterized in that** voltage peaks in an on-board network (4, 5) are reduced by means of the DC/DC converter (3) and/or **in that** the DC/DC converter (3) is monitored in its operating mode, wherein the low-voltage of the low-voltage on-board network (5) is detected and evaluated.

7. System (1) for a motor vehicle, comprising a controller (8), a high-voltage on-board network (4), a low-voltage on-board network (5), a DC/DC converter (3) which connects the high-voltage on-board network (4) and the low-voltage on-board network (5), and an electrical machine (2), in particular a starter generator or motor generator, **characterized in that** the system (1) is configured to perform all steps of a method according to any one of claims 1 to 6,
wherein the controller (8) is configured to vary an operating mode (20-31) of the system (1) depending on operating requirements, in particular an operating state of the motor vehicle,
wherein the system (1) is configured to be operated in a recuperation mode (26) during a thrust operation or a braking operation of the motor vehicle,
wherein the electrical machine (2) is configured to be operated with a torque controllable by the controller (8) in communication with a brake safety device (15) of the motor vehicle, the brake safety device comprising a control unit,
wherein the controller (8) is configured to determine an information about the torque or about a future torque of the electrical machine (2) and to transmit said information to the control unit of the brake safety device (15), and
wherein the brake safety device (15) is configured to consider the torque and/or a variation of the future torque to perform an adjustment of a brake force distribution.

8. Computer program comprising instructions causing the system according to claim 7 to perform the method steps according to any one of claims 1 to 6.

## Revendications

1. Procédé pour faire fonctionner un système (1) pour un véhicule automobile, dans lequel le système (1) comprend une commande (8), un réseau de bord à tension élevée (4), un réseau de bord à basse tension (5), un convertisseur continu/continu (3) qui relie le réseau de bord à tension élevée (4) et le réseau de bord à basse tension (5), et une machine électrique (2), en particulier un générateur-démarreur ou un moteur-générateur, **caractérisé en ce qu'**un mode de fonctionnement (20-31) du système (1) varie en fonction des exigences de fonctionnement, en particulier un état de fonctionnement du véhicule automobile, dans lequel en régime de décélération ou en régime de freinage du véhicule automobile, le système (1) fonctionne dans un mode de récupération (26), dans lequel la machine électrique (2) fonctionne avec un couple pouvant être commandé avec la commande (8), via une communication avec un dispositif de sécurité de freinage (15) du véhicule automobile, le dispositif de sécurité de freinage comprenant une unité de commande,
dans lequel une information concernant le couple ou concernant un futur couple de la machine électrique (2) est déterminée par la commande (8) et est transmise à l'unité de commande du dispositif de sécurité de freinage (15),
dans lequel le couple et/ou une allure du futur couple est pris en compte par le dispositif de sécurité de freinage (15) afin de procéder à une adaptation de la répartition de la force de freinage,
dans lequel le couple est augmenté dans le mode de récupération en augmentant une basse tension du réseau de bord basse tension, de sorte qu'un courant via le convertisseur continu/continu est augmenté.

2. Procédé selon la revendication 1, **caractérisé en ce que** le système (1) fonctionne dans un mode à tension élevée (27), dans lequel la machine électrique (2) fonctionne en mode générateur pour produire une tension élevée, en particulier avec une vitesse de ralenti augmentée d'un moteur à combustion interne du véhicule automobile.

3. Procédé selon l'une des revendications 1 ou 2, **caractérisé en ce que** le système (1) fonctionne dans un mode d'entraînement (24), dans lequel la machine électrique (2) fonctionne en mode moteur pour fournir une assistance à un entraînement ou pour un entraînement direct du véhicule automobile.

4. Procédé selon l'une des revendications 1 à 3, **caractérisé en ce que** le système (1) fonctionne dans un mode de démarrage (23), dans lequel la machine électrique (2) fonctionne en mode moteur pour démarrer le moteur à combustion interne du véhicule automobile.

5. Procédé selon l'une des revendications 1 à 4, **caractérisé en ce que** le système (1) est réalisé avec un dispositif de détection et un dispositif d'évaluation, dans lequel le dispositif de détection permet de détecter au moins une grandeur de fonctionnement et le dispositif d'évaluation permet de déduire un couple de la machine électrique (2) à partir au moins de la grandeur de fonctionnement ou d'une combinaison de grandeurs de fonctionnement, dans lequel la grandeur de fonctionnement est donnée par l'une des grandeurs suivantes :
- un courant d'excitation (IE),
- une vitesse de rotation (ng),
- une tension de générateur (Ug),
- un taux d'impulsions de l'étage de sortie du circuit d'excitation (DF),
- une température de composant (Ta),
- un courant de sortie du générateur (Ig),
- un courant dans une phase (Iph),
- un courant dans une branche de pont redresseur (IGLR),
- une capacité de condensateur (C),
- une tension du condensateur (UC).

6. Procédé selon l'une des revendications 1 à 5, **caractérisé en ce que** des pics de tension dans un réseau de bord (4, 5) sont réduits avec le convertisseur continu/continu (3) et/ou **en ce que** le mode de fonctionnement du convertisseur continu/continu (3) est surveillé, dans lequel le basse tension du réseau de bord à basse tension (5) est détectée et évaluée.

7. Système (1) d'un véhicule automobile, comprenant une commande(8), un réseau de bord à tension élevée (4), un réseau de bord à basse tension (5), un convertisseur continu/continu (3) qui relie le réseau de bord à tension élevée (4) et le réseau de bord à basse tension (5), et une machine électrique (2), en particulier un générateur-démarreur ou un moteur-générateur, **caractérisé en ce que** le système (1) est formé de manière à exécuter toutes les étapes d'un procédé selon l'une des revendications 1 à 6, dans lequel la commande (8) est adaptée pour faire varier un mode de fonctionnement (20-31) du système (1) en fonction d'exigences de fonctionnement, en particulier un état de fonctionnement du véhicule automobile,
dans lequel le système (1) est adapté pour fonctionner dans un mode de récupération (26) en régime de décélération ou en régime de freinage du véhicule automobile,
dans lequel la machine électrique (2) est conçue pour fonctionner avec un couple pouvant être commandé avec la commande (8), via une communication avec un dispositif de sécurité de freinage (15) du véhicule automobile, le dispositif de sécurité de freinage comprenant une unité de commande,
dans lequel la commande (8) est conçue pour déterminer une information concernant le couple ou concernant un futur couple de la machine électrique (2) et pour la transmettre ladite information à l'unité de commande du dispositif de sécurité de freinage (15) et
dans lequel le dispositif de sécurité de freinage (15) est conçu pour tenir compte du couple et/ou d'une évolution du futur couple, afin de procéder à une adaptation de la répartition de la force de freinage.

8. Programme informatique comportant des instructions qui amènent le système selon la revendication 7 à exécuter les étapes de procédé selon l'une des revendications 1 à 6.
